# EUROPÄISCHE PATENTSCHRIFT

(11) **EP 0 983 923 B1**
(45) Veröffentlichungstag und Bekanntmachung des Hinweises auf die Patenterteilung: **02.03.2005**
(21) Anmeldenummer: 99117268.5
(22) Anmeldetag: 02.09.1999
(51) Int. Cl.: B62B 5/04, B62B 3/06

(54) **Deichselgeführtes Flurförderzeug mit einer Speicherbremse**
Industrial truck guided by a towbar comprising a spring brake
Actuateur de frein à ressort pour chariot de manutention guidé par timon

(30) Priorität: 04.09.1998 DE 19840406
(43) Veröffentlichungstag der Anmeldung: 08.03.2000
(73) Patentinhaber: STILL S.A.R.L., 77100 Meaux (FR)
(72) Erfinder: Bimont, Cyril, 60300 Senlis (FR); Fortin, Dominique, 60160 Montataire (FR)
(74) Vertreter: Zahn, Christoph

(56) Entgegenhaltungen:
- CH-A- 679 929
- DE-A- 4 201 012
- DE-A- 19 510 716
- US-A- 4 669 561

## Beschreibung

Die Erfindung betrifft ein Flurförderzeug mit einer mittels einer Deichsel um eine im wesentlichen vertikale Lenkachse drehbaren Antriebseinheit, wobei die Antriebseinheit eine mittels eines Bremslüfters lösbare Speicherbremse aufweist und ein von dem Bremslüfter unabhängiges Mittel zum Lösen der Speicherbremse vorgesehen ist, und wobei die Deichsel um eine horizontale Achse schwenkbar mit der Antriebseinheit verbunden ist.

Bei Flurförderzeugen der genannten Art handelt es sich um deichselgeführte Flurförderzeuge, die in der Regel als Mitgängerfahrzeuge betrieben werden. Durch Drehen der Deichsel um die vertikale Lenkachse wird die gesamte Antriebseinheit mitgedreht, wobei die Antriebseinheit ein Antriebsrad, eine Speicherbremse und einen Antriebsmotor umfaßt. Die Deichsel, an der sich verschiedene Bedienelemente des Flurförderzeugs befinden, kann direkt an der Antriebseinheit befestigt, oder aber indirekt, beispielsweise mittels eines Kettengetriebes, mit der Antriebseinheit verbunden sein.

Die in der Antriebseinheit vorgesehene Speicherbremse ist mittels des Bremslüfters ausschließlich während des Betriebs des Flurförderzeugs gelöst. Der Bremslüfter wird hierzu in der Regel durch Schwenken der Antriebseinheit um eine horizontale Achse gesteuert, wobei die Speicherbremse bei in senkrechter oder waagrechter Endstellung befindlicher Deichsel betätigt ist und bei in Betriebsstellung befindlicher Deichsel gelöst ist.

Zum Durchführen von Wartungsarbeiten kann es erforderlich sein, die Speicherbremse unabhängig von der Funktion des Bremslüfters, beispielsweise auch unabhängig von der Versorgung mit elektrischer Energie, zu lösen. Hierfür kann ein von dem Bremslüfter getrenntes Mittel zum Lösen der Speicherbremse vorgesehen sein, das in der Regel manuell betätigbar ist. Die Bedienung bekannter Mittel zum Lösen der Speicherbremse erfordert einen erheblichen Werkzeug- und Montageaufwand. Zudem ist bei bekannten Mitteln zum Lösen der Speicherbremse nicht automatisch sichergestellt, daß die Speicherbremse nach Abschluß der Wartungsarbeiten wieder ihre normale Funktion aufnimmt, das Mittel zum Lösen der Speicherbremse also automatisch deaktiviert wird.

Der vorliegenden Erfindung liegt daher die Aufgabe zugrunde, ein einfach zu bedienendes Mittel zum Lösen der Speicherbremse zur Verfügung zu stellen, das während des normalen Betriebs des Flurförderzeugs automatisch deaktiviert ist.

Diese Aufgabe wird erfindungsgemäß dadurch gelöst, daß das von dem Bremslüfter unabhängige Mittel zum Lösen der Speicherbremse in einer Stellung arretierbar ist, bei der die Speicherbremse gelöst ist, und diese Arretierung durch Bewegen der Deichsel in eine definierte Stellung lösbar ist. Die Speicherbremse kann mit dem Mittel zum Lösen der Speicherbremse gelöst und anschließend in diesem Zustand arretiert werden. Hierfür muß die Deichsel um die horizontale Achse in einen vorgegebenen Winkelbereich geschwenkt sein. Um die Arretierung des Mittels zum Lösen der Speicherbremse aufzuheben, schwenkt man die Deichsel um die horizontale Achse in eine definierte Stellung.

Vorzugsweise ist die Arretierung durch Bewegen der Deichsel in senkrechte Stellung lösbar.

Wenn die Deichsel durch ein Federmittel, beispielsweise eine Gasfeder, in ihre senkrechte Stellung bewegbar ist, ergibt sich der Vorteil, daß die Arretierung des Mittels zum Lösen der Speicherbremse automatisch gelöst wird, wenn die Deichsel losgelassen wird. Die Speicherbremse ist somit nur dann gelöst, wenn die Deichsel, beispielsweise von einer Bedienperson, in dem vorgegebenen Winkelbereich gehalten wird. Ein unbeabsichtigtes Arretieren des Mittels zum Lösen der Speicherbremse ist damit ausgeschlossen.

Die oben beschriebene zweckmäßige Funktionsweise des Mittels zum Lösen der Speicherbremse wird in besonders einfach aufgebauter und leicht zu bedienender Weise durch die nachfolgend beschrieben mechanische Anordnung erreicht:
- Das Mittel zum Lösen der Speicherbremse weist mindestens einen schwenkbaren ersten Hebel auf, wobei durch Schwenken des ersten Hebels eine die Speicherbremse lösende Kraft erzeugbar ist.
- Der erste Hebel ist durch eine Bedienperson schwenkbar.
- Der erste Hebel ist an der Antriebseinheit gelagert.
- Das Mittel zum Lösen der Speicherbremse weist mindestens einen an dem ersten Hebel schwenkbar gelagerten, mit der Speicherbremse verbundenen zweiten Hebel auf.
- Der zweite Hebel ist elastisch verformbar.

Die Lagerstellen und Kraftangriffspunkte der Hebel, der Deichsel und der Speicherbremse sind derart angeordnet, daß die Speicherbremse in Abhängigkeit von der Stellung der Hebel in nachfolgend aufgeführter Weise betätigt wird:
- Durch Schwenken des ersten Hebels ist eine über den zweiten Hebel auf die Speicherbremse wirkende Kraft erzeugbar.
- Der erste und der zweite Hebel sind derart angeordnet, daß die mittels des zweiten Hebels auf die Speicherbremse ausgeübte Kraft als Drehmoment um die Lagerstelle des ersten Hebels auf den ersten Hebel wirkt.
- Das Drehmoment bewirkt bei gelöster Speicherbremse ein Arretieren des ersten Hebels in einer Stellung, bei der die Speicherbremse gelöst ist.
- Das Drehmoment bewirkt bei nicht oder nicht vollständig gelöster Speicherbremse ein Schwenken des ersten Hebels in eine Stellung, bei der die Speicherbremse geschlossen ist.
- Die Deichsel und der erste Hebel sind derart angeordnet, daß durch Bewegen der Deichsel in senkrechte Stellung der erste Hebel zwangsweise in eine Stellung bewegt wird, bei der das Drehmoment den ersten Hebels in diejenige Richtung weiterbewegt, bei der die Speicherbremse geschlossen ist.

Zweckmäßigerweise kann die Speicherbremse als Federspeicherbremse ausgeführt sein. Wenn der Bremslüfter einen Elektromagnet aufweist, wird die Speicherbremse während des normalen Betriebs des Flurförderzeugs durch die Kraft des Elektromagnets gelöst.

Weitere Vorteile und Einzelheiten der Erfindung werden anhand des in den schematischen Figuren dargestellten Ausführungsbeispiels näher erläutert. Dabei zeigt
- Fig. 1: ein gattungsgemäßes Flurförderzeug in Seitenansicht,
- Fig. 2 - 5: das Mittel zum Lösen der Speicherbremse in verschiedenen Ansichten und Betriebszuständen.

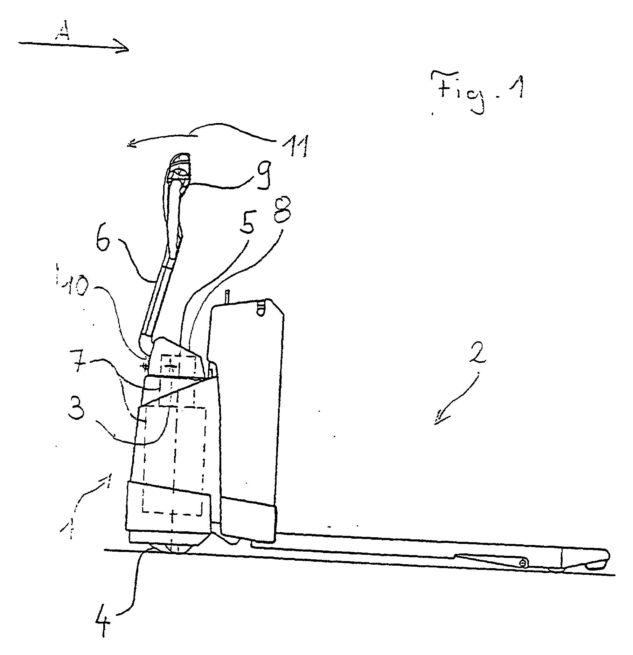

Figur 1 zeigt als gattungsgemäßes Flurförderzeug einen deichselgeführten Niederhubwagen. Die vorliegende Erfindung kann jedoch in analoger Bauweise auch bei Hubwagen anderer Bauart, beispielsweise bei Hochhubwagen oder Kommissionierfahrzeugen eingesetzt werden.

Das Flurförderzeug besitzt einen Antriebsteil 1 und einen relativ zum Antriebsteil 1 anhebbaren Lastteil 2. In dem Antriebsteil 1 befindet sich ein mit gestrichelten Linien dargestelltes Antriebsaggregat 7, das gemeinsam mit einem auf der Fahrbahn aufstehenden Antriebsrad 4 um eine vertikale Lenkachse 5 schwenkbar ist. Das Schwenken des Antriebsaggregats 7 um die vertikale Lenkachse 5 erfolgt mittels einer an einem oberen Bereich des Antriebsaggregats 7 angeordneten Deichsel 6. Die Deichsel 6 kann darüber hinaus relativ zu dem Antriebsaggregat 7 um eine horizontale Achse 3 in Richtung 11 in eine Betriebsposition geschwenkt werden. In der Betriebsposition der Deichsel sind an einem Kopf 9 der Deichsel 6 angeordnete Bedienelemente ergonomisch günstig zugänglich. Im Ruhezustand des Flurförderzeugs ist die Deichsel mittels einer Gasfeder 10 in die dargestellte vertikale Position gedrückt.

Der genannte obere Bereich des Antriebsaggregats 7, in dem auch eine Speicherbremse des Flurförderzeugs sowie ein Mittel zum Lösen dieser Speicherbremse angeordnet sind, ist nach Entfernen einer Haube 8 von außen zugänglich.

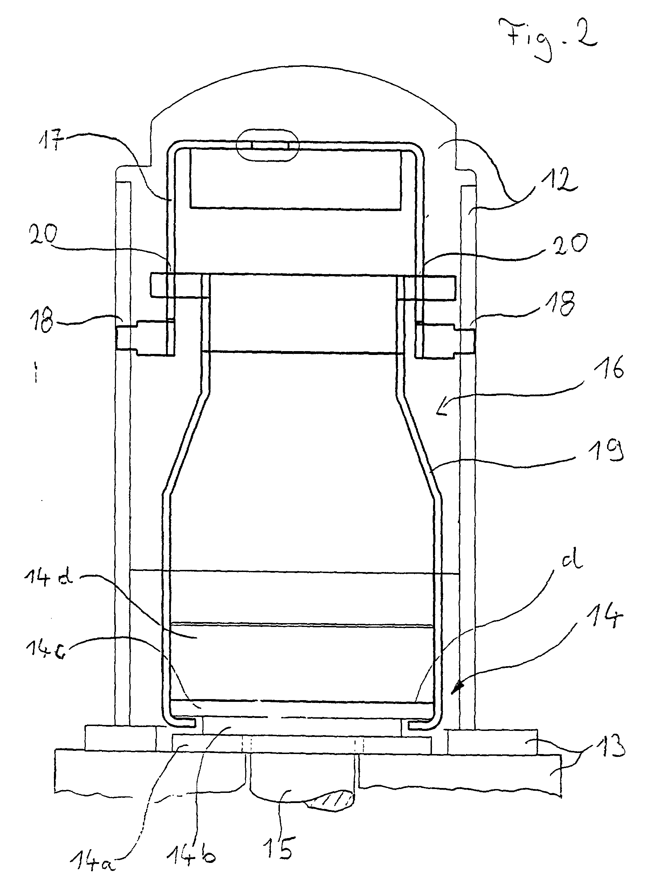

Figur 2 zeigt den unter der Haube 8 angeordneten oberen Bereich des Antriebsaggregats 7 in Blickrichtung A. Zu erkennen ist hier ein U-förmiger Rahmen 12, der oben auf das Gehäuse 13 eines Elektromotors aufgesetzt und starr mit diesem verbunden ist. Ebenfalls mit dem nicht rotierenden Gehäuse 13 verbunden ist ein feststehender Bremskörper 14a einer Speicherbremse 14. Oberhalb des Bremskörpers 14a befindet sich eine Bremsscheibe 14b, die mit einer rotierenden Welle 15 des Elektromotors verbunden ist. Oberhalb der Bremsscheibe 14b ist eine nicht rotierende Druckplatte 14c angeordnet, die mittels Federkraft auf die Bremsscheibe gedrückt wird. Als Bremslüfter ist in diesem Ausführungsbeispiel ein Elektromagnet 14d vorgesehen, der die Druckplatte 14c entgegen der Federkraft von der Bremsscheibe 14b lösen kann, wobei der Luftspalt d geschlossen wird.

Erfindungsgemäß ist zusätzlich ein Mittel 16 zum Lösen der Speicherbremse 14 vorgesehen, mit dem die Speicherbremse 14 unabhängig von der Funktion des Elektromagnets 14d gelöst werden kann. Dieses Mittel 16 weist im dargestellten Ausführungsbeispiel einen ersten Hebel 17 auf, der an dem Rahmen 12 der Antriebseinheit an den Lagerstellen 18 drehbar gelagert ist. Ein die Druckplatte 14c umgreifender zweiter Hebel 19 ist an den Lagerstellen 20 am ersten Hebel 17 drehbar gelagert.

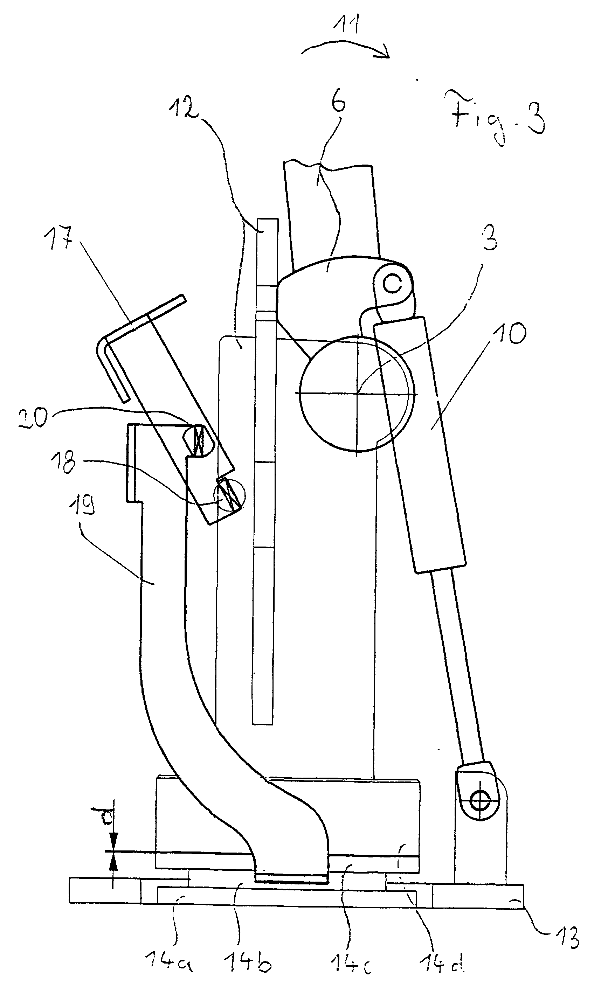

Die Funktionsweise des Mittels 16 zum Lösen der Speicherbremse wird anhand der nachfolgend beschriebenen Figuren 3 bis 5 erläutert, die den oberen Bereich des Antriebsaggregats 7 in Seitenansicht (seitenvertauscht zu Figur 1) zeigen.

In Figur 3 ist das Mittel 16 zum Lösen der Speicherbremse im Ruhezustand dargestellt. Der die Druckplatte 14c umgreifende zweite Hebel 19 übt keine Kraft auf die Speicherbremse aus. Die Deichsel 6 befindet sich in ihrer vertikalen Ruheposition.

Um die Speicherbremse 14 ausgehend von dieser Position mit dem Mittel 16 zum Lösen der Speicherbremse 14 zu lösen, muß zunächst die Deichsel 6 in Richtung 11 in eine Betriebsposition geschwenkt werden. Anschließend wird der erste Hebel 17 im Uhrzeigersinn 12 geschwenkt, bis er an dem Rahmen 12 ansteht. Hierbei wird der zweite Hebel 19 mit der Druckplatte 14c nach oben gezogen und damit die Speicherbremse 14 gelöst. Der zweite Hebel 19 wird dabei geringfügig elastisch verformt.

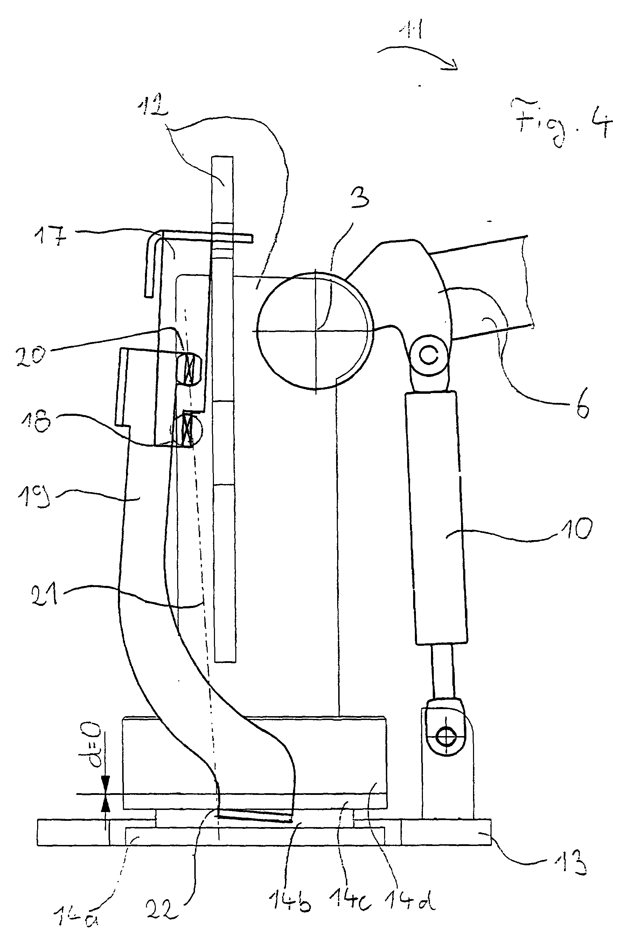

Diese Betriebsstellung des Mittels 16 zum Lösen der Speicherbremse 14 ist in Figur 4 abgebildet. Die Druckplatte 14c wird vor dem zweiten Hebel 19 an dem Berührungspunkt 22 gehalten. Mit strichpunktierten Linien dargestellt ist die sich zwischen dem Berührungspunkt 22 und der Lagerstelle 20 ergebende Kraftlinie 21. Wie zu erkennen ist, verläuft diese Kraftlinie 21 in der Figur 4 rechts von der Lagerstelle 18, an welcher der erste Hebel 17 an dem Rahmen 12 befestigt ist. Die beiden Hebel 17, 19 befinden sich hierdurch in einer Stellung, bei der ein selbsttätiges Rückstellen des Mittels 16 und damit ein Lösen der Speicherbremse 14 verhindert ist. Der zweite Hebel 19 übt über die Lagerstelle 20 ein Drehmoment im Uhrzeigersinn auf den ersten Hebel 17 aus. Das Mittel 16 ist somit arretiert in einer Stellung, bei der die Speicherbremse 14 gelöst ist.

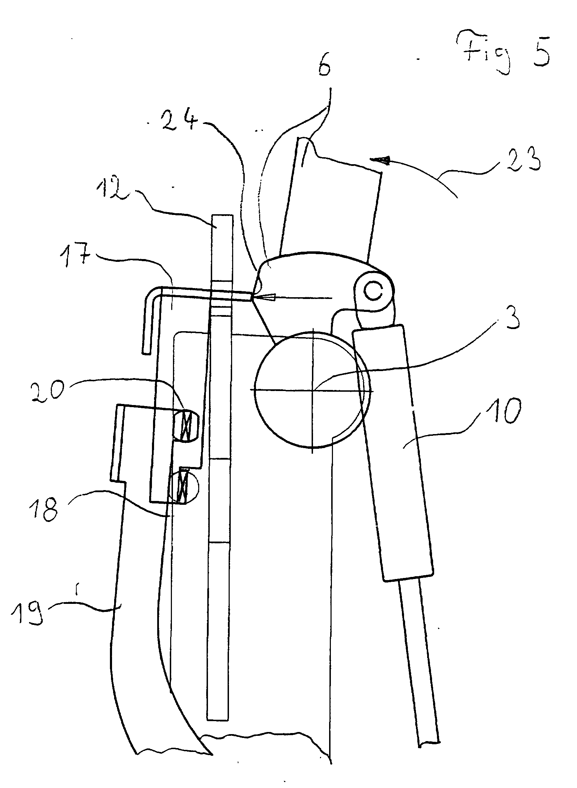

Wenn, wie in Figur 5 dargestellt, ausgehend von dieser arretierten Stellung die Deichsel 6 in Richtung 23 in ihre vertikale Endstellung zurückbewegt wird, wird hierdurch die Arretierung des Mittels 16 zum Lösen der Speicherbremse 14 automatisch gelöst, so daß die Speicherbremse 14 wieder infolge Federkraft betätigt wird. Das Zurückbewegen der Deichsel 6 kann entweder durch eine Bedienperson, oder durch die Kraft der Gasfeder 10 erfolgen.

Das Lösen der Arretierung des Mittels 16 erfolgt dadurch, daß die Deichsel 6 an der Stelle 24 auf den ersten Hebel 17 drückt, wodurch dieser geringfügig im Gegenuhrzeigersinn gedreht wird. Infolge dieser geringfügigen Drehung verschiebt sich die Lage der in Figur 4 dargestellten Kraftlinie 21 nach links, so daß sie nicht mehr durch die Lagerstelle 18 verläuft. Der zweite Hebel 19 übt dann über die Lagerstelle 20 ein Drehmoment im Gegenuhrzeigersinn, auf den ersten Hebel (17) aus. Dies bewirkt ein selbsttätiges Rückstellen der Hebel 17, 19 in die in Figur 3 dargestellte Position, in der die Speicherbremse infolge Federkraft betätigt ist.

## Patentansprüche

1. Flurförderzeug mit einer mittels einer Deichsel (6) um eine im wesentlichen vertikale Lenkachse (5) drehbaren Antriebseinheit (7), wobei die Antriebseinheit (7) eine mittels eines Bremslüfters lösbare Speicherbremse (14) aufweist und ein von dem Bremslüfter unabhängiges Mittel (16) zum Lösen der Speicherbremse (14) vorgesehen ist, und wobei die Deichsel (6) um eine horizontale Achse (3) schwenkbar mit der Antriebseinheit (7) verbunden ist, **dadurch gekennzeichnet, daß** das von dem Bremslüfter unabhängige Mittel (16) zum Lösen der Speicherbremse (14) in einer Stellung arretierbar ist, bei der die Speicherbremse (14) gelöst ist, und diese Arretierung durch Bewegen der Deichsel (6) in eine definierte Stellung lösbar ist.

2. Flurförderzeug nach Anspruch 1, **dadurch gekennzeichnet, daß** die Arretierung durch Bewegen der Deichsel (6) in senkrechte Stellung lösbar ist.

3. Flurförderzeug nach Anspruch 1 oder 2, **dadurch gekennzeichnet, daß** die Deichsel (6) durch ein Federmittel, beispielsweise eine Gasfeder (10), in ihre senkrechte Stellung bewegbar ist.

4. Flurförderzeug nach einem der Ansprüche 1 bis 3, **dadurch gekennzeichnet, daß** das Mittel (16) zum Lösen der Speicherbremse (14) mindestens einen schwenkbaren ersten Hebel (17) aufweist und durch Schwenken des ersten Hebels (17) eine die Speicherbremse (14) lösende Kraft erzeugbar ist.

5. Flurförderzeug nach Anspruch 4, **dadurch gekennzeichnet, daß** der erste Hebel (17) durch eine Bedienperson schwenkbar ist.

6. Flurförderzeug nach Anspruch 4 oder 5, **dadurch gekennzeichnet, daß** der erste Hebel (17) an der Antriebseinheit (7) gelagert ist.

7. Flurförderzeug nach einem der Ansprüche 4 bis 6, **dadurch gekennzeichnet, daß** das Mittel (16) zum Lösen der Speicherbremse (14) mindestens einen an dem ersten Hebel (17) schwenkbar gelagerten, mit der Speicherbremse (14) verbundenen zweiten Hebel (19) aufweist.

8. Flurförderzeug nach Anspruch 7, **dadurch gekennzeichnet, daß** durch Schwenken des ersten Hebels (17) eine über den zweiten Hebel (19) auf die Speicherbremse (14) wirkende Kraft erzeugbar ist.

9. Flurförderzeug nach Anspruch 7 oder 8, **dadurch gekennzeichnet, daß** der zweite Hebel (19) elastisch verformbar ist.

10. Flurförderzeug nach einem der Ansprüche 7 bis 9, **dadurch gekennzeichnet, daß** der erste und der zweite Hebel (19) derart angeordnet sind, daß die mittels des zweiten Hebels (19) auf die Speicherbremse (14) ausgeübte Kraft als Drehmoment auf den ersten Hebel (17) wirkt.

11. Flurförderzeug nach Anspruch 10, **dadurch gekennzeichnet, daß** das Drehmoment bei gelöster Speicherbremse (14) ein Arretieren des ersten Hebels (17) in einer Stellung bewirkt, bei der die Speicherbremse (14) gelöst ist.

12. Flurförderzeug nach Anspruch 10 oder 11, **dadurch gekennzeichnet, daß** das Drehmoment bei nicht oder nicht vollständig gelöster Speicherbremse (14) ein Schwenken des ersten Hebels (17) in eine Stellung bewirkt, bei der die Speicherbremse (14) geschlossen ist.

13. Flurförderzeug nach einem der Ansprüche 10 bis 12, **dadurch gekennzeichnet, daß** die Deichsel (6) und der erste Hebel (17) derart angeordnet sind, daß durch Bewegen der Deichsel (6) in senkrechte Stellung der erste Hebel (17) zwangsweise in eine Stellung bewegt wird, bei der das Drehmoment den ersten Hebel (17) in diejenige Richtung weiterbewegt, bei der die Speicherbremse (14) geschlossen ist.

14. Flurförderzeug nach einem der Ansprüche 1 bis 13, **dadurch gekennzeichnet, daß** die Speicherbremse (14) als Federspeicherbremse (14) ausgeführt ist.

15. Flurförderzeug nach einem der Ansprüche 1 bis 14, **dadurch gekennzeichnet, daß** der Bremslüfter einen Elektromagnet aufweist.

## Claims

1. Industrial truck having a drive unit (7), which can be rotated about an essentially vertical steering axis (5) by means of a tiller (6), the drive unit (7) having a storage brake (14), which can be released by means of a brake release, and a means (16), which is independent of the brake release, for releasing the storage brake (14) being provided, and the tiller (6) being connected to the drive unit (7) such that it can pivot about a horizontal axis (3), **characterized in that** the means (16), which is independent of the brake release, for releasing the storage brake (14) can be locked in a position in which the storage brake (14) is released, and this locking can be released by moving the tiller (6) to a defined position.

2. Industrial truck according to Claim 1, **characterized in that** the locking can be released by moving the tiller (6) to a perpendicular position.

3. Industrial truck according to Claim 1 or 2, **characterized in that** the tiller (6) can be moved to its perpendicular position using a spring means, for example a gas spring (10).

4. Industrial truck according to one of Claims 1 to 3, **characterized in that** the means (16) for releasing the storage brake (14) has at least one first lever (17) which can be pivoted, and a force releasing the storage brake (14) can be produced by pivoting the first lever (17).

5. Industrial truck according to Claim 4, **characterized in that** the first lever (17) can be pivoted by an operator.

6. Industrial truck according to Claim 4 or 5, **characterized in that** the first lever (17) is mounted on the drive unit (7).

7. Industrial truck according to one of Claims 4 to 6, **characterized in that** the means (16) for releasing the storage brake (14) has at least one second lever (19), which is mounted on the first lever (17) such that it can pivot and is connected to the storage brake (14).

8. Industrial truck according to Claim 7, **characterized in that** a force acting on the storage brake (14) via the second lever (19) can be produced by pivoting the first lever (17).

9. Industrial truck according to Claim 7 or 8, **characterized in that** the second lever (19) can be deformed elastically.

10. Industrial truck according to one of Claims 7 to 9, **characterized in that** the first and the second lever (19) are arranged such that the force exerted on the storage brake (14) by means of the second lever (19) acts as torque on the first lever (17).

11. Industrial truck according to Claim 10, **characterized in that**, when the storage brake (14) is released, the torque causes the first lever (17) to be locked in a position in which the storage brake (14) is released.

12. Industrial truck according to Claim 10 or 11, **characterized in that**, when the storage brake (14) is not released or is not completely released, the torque causes the first lever (17) to be pivoted into a position in which the storage brake (14) is engaged.

13. Industrial truck according to one of Claims 10 to 12, **characterized in that** the tiller (6) and the first lever (17) are arranged such that, by moving the tiller (6) to a perpendicular position, the first lever (17) is forced to move to a position in which the torque continues to move the first lever (17) **in that** direction in which the storage brake (14) is engaged.

14. Industrial truck according to one of Claims 1 to 13, **characterized in that** the storage brake (14) is in the form of a spring storage brake (14).

15. Industrial truck according to one of Claims 1 to 14, **characterized in that** the brake release has an electromagnet.

## Revendications

1. Chariot de manutention, avec une unité d'entraînement (7) rotative à l'aide d'un timon (6) autour d'un axe de direction (5) sensiblement vertical, l'unité d'entraînement (7) étant dotée d'un frein à accumulation (14) pouvant être desserré à l'aide d'un releveur de frein et un moyen (16) indépendant du releveur de frein étant prévu pour desserrer le frein à accumulation (14) et le timon (6) étant relié à l'unité d'entraînement (7) de façon à pouvoir pivoter autour d'un axe horizontal (3), **caractérisé en ce que** le moyen (16) indépendant du releveur de frein destiné à desserrer le frein à accumulation (14) peut être bloqué dans une position dans laquelle le frein à accumulation (14) est desserré et **en ce que** ce blocage peut être desserré par déplacement du timon (6) dans une position définie.

2. Chariot de manutention selon la revendication 1, **caractérisé en ce que** le blocage peut être desserré par déplacement du timon (6) en position verticale.

3. Chariot de manutention selon la revendication 1 ou 2, **caractérisé en ce que** le timon (6) est déplaçable dans sa position verticale par un moyen résilient, par exemple un ressort pneumatique (10).

4. Chariot de manutention selon l'une quelconque des revendications 1 à 3, **caractérisé en ce que** le moyen (16) pour desserrer le frein à accumulation (14) est doté d'au moins un premier levier (17) pivotant et **en ce qu'**une force de desserrage du frein à accumulation (14) peut être générée par pivotement du premier levier (17).

5. Chariot de manutention selon la revendication 4, **caractérisé en ce que** le premier levier (17) peut être pivoté par un opérateur.

6. Chariot de manutention selon la revendication 4 ou 5, **caractérisé en ce que** le premier levier (17) est logé sur l'unité d'entraînement (7).

7. Chariot de manutention selon l'une quelconque des revendications 4 à 6, **caractérisé en ce que** le moyen (16) pour desserrer le frein à accumulation (14) est doté d'au moins un second levier (19) logé de façon pivotante sur le premier levier (17), relié avec le frein à accumulation (14).

8. Chariot de manutention selon la revendication 7, **caractérisé en ce que** par pivotement du premier levier (17), une force agissant sur le frein à accumulation (14) par l'intermédiaire du second levier (19) peut être générée.

9. Chariot de manutention selon la revendication 7 ou 8, **caractérisé en ce que** le second levier (19) est déformable de façon élastique.

10. Chariot de manutention selon l'une quelconque des revendications 7 à 9, **caractérisé en ce que** le premier et le second levier (19) sont disposés de façon à ce que la force exercée sur le frein à accumulation (14) à l'aide du second levier (19) agisse en tant que couple de rotation sur le premier levier (17).

11. Chariot de manutention selon la revendication 10, **caractérisé en ce que** lorsque le frein à accumulation (14) est desserré, le couple de rotation a pour effet de bloquer le premier levier (17) dans une position dans laquelle le frein à accumulation (14) est desserré.

12. Chariot de manutention selon la revendication 10 ou 11, **caractérisé en ce que** lorsque le frein à accumulation (14) n'est pas desserré ou pas entièrement desserré, le couple de rotation a pour effet de pivoter le premier levier (17) dans une position, dans laquelle le frein à accumulation (14) est fermé.

13. Chariot de manutention selon l'une quelconque des revendications 10 à 12, **caractérisé en ce que** le timon (6) et le premier levier (17) sont disposés de façon telle, que par déplacement du timon (6) dans une position verticale, le premier levier (17) est déplacé de force dans une position dans laquelle le couple de rotation continue à déplacer le premier levier (17) dans la position dans laquelle le frein à accumulation (14) est fermé.

14. Chariot de manutention selon l'une quelconque des revendications 1 à 13, **caractérisé en ce que** le frein à accumulation (14) est réalisé sous la forme d'un frein à accumulation à ressort (14).

15. Chariot de manutention selon l'une quelconque des revendications 1 à 14, **caractérisé en ce que** le releveur de frein est doté d'un électroaimant.
